# EUROPÄISCHE PATENTSCHRIFT

(11) **EP 3 918 699 B1**
(45) Veröffentlichungstag und Bekanntmachung des Hinweises auf die Patenterteilung: **05.10.2022**
(21) Anmeldenummer: 21712459.3
(22) Anmeldetag: 11.03.2021
(51) Int. Cl.: H02K 15/04

(54) **VORRICHTUNG ZUM BIEGEN MINDESTENS EINES IN EINEM AUSGANGSZUSTAND U-FÖRMIGEN LEITERSTÜCKS UND EIN ENTSPRECHENDES VERFAHREN**
DEVICE FOR BENDING AT LEAST ONE, IN AN INITIAL STATE U-SHAPED, CONDUCTOR PIECE AND A CORRESPONDING METHOD
DISPOSITIF DE CINTRAGE D'AU MOINS UNE PIECE CONDUCTRICE, DANS UN ETAT INITIAL EN FORME DE U, ET PROCEDE CORRESPONDANT

(30) Priorität: 16.03.2020 DE 102020107192
(43) Veröffentlichungstag der Anmeldung: 08.12.2021
(73) Patentinhaber: Gehring Technologies GmbH + Co. KG, 73760 Ostfildern (DE)
(72) Erfinder: MERGLER, Thomas, 25081 BEDIZZOLE (IT); VAI, Pier, 25030 POMPIANO (IT)
(74) Vertreter: DREISS Patentanwälte PartG mbB
(86) Internationale Anmeldenummer: PCT/EP2021/056224
(87) Internationale Veröffentlichungsnummer: WO 2021/185673

(56) Entgegenhaltungen:
- EP-A1- 0 222 140
- WO-A1-2019/084587
- WO-A1-2019/084587
- CN-U- 209 823 612
- DE-A1-102017 004 538
- DE-A1-102018 108 656
- JP-A- 2004 072 839
- JP-A- 2004 072 839
- JP-A- 2015 106 964
- JP-A- 2015 106 964
- JP-A- 2016 140 223
- JP-A- 2016 140 223
- JP-A- 2016 163 359
- JP-A- 2016 163 359
- US-A1- 2019 296 620
- US-A1- 2019 296 620

## Beschreibung

Die Erfindung betrifft eine Vorrichtung zum Biegen mindestens eines in einem Ausgangszustand U-förmigen Leiterstücks, sowie ein entsprechendes Verfahren.

Bei der sogenannten Hairpin-Technologie werden im weitesten Sinne haarnadelförmige Leiterstücke (Hairpins) zusammen mit einzelnen andersartigen Sonderpins in einen Statorkern eingesetzt. Hairpins sind dabei Leiterstücke mit im Wesentlichen zwei länglich erstreckten Schenkeln und einem diese beiden Schenkel verbindenden Verbindungsabschnitt. Die Vielzahl an Leiterstücken ist dabei üblicherweise derart angeordnet, dass die Leiterstücke auf mehreren in einer Umfangsrichtung verlaufenden Kreisbahnen in Reihen, die jeweils in einer Radialrichtung erstreckt sind, angeordnet sind. Dabei ragen die freien Enden der Schenkel auf einer Seite des Statorkerns aus diesem hinaus und die Verbindungsabschnitte sind auf der anderen Seite des Statorkerns angeordnet.

Durch verschiedene Geometrien insbesondere des Verbindungsabschnitts der einzelnen Leiterstücke wird eine möglichst effiziente und kompakte Bauweise erzielt. Dabei wird die Herstellung gewünschter Geometrien durch ein Biegen der Leiterstücke und insbesondere des Verbindungsabschnitts erzielt.

JP 2016 163359 A, US 2019/296620 A1, JP 2016 140223 A zeigen jeweils eine Vorrichtung mit Merkmalen des Anspruchs 1.

Es ist Aufgabe der vorliegenden Erfindung, eine Vorrichtung und ein Verfahren zur Verfügung zu stellen, mit denen ein Biegen möglichst effizient und präzise durchgeführt werden kann, wobei ein Hairpin geschaffen wird, der eine möglichste hohe Anordnungsdichte im in den Statorkern eingesetzten Zustand erlaubt.

Gelöst wird die Aufgabe durch eine Vorrichtung zum Biegen mindestens eines in einem Ausgangszustand U-förmigen Leiterstücks, das aus einem ersten gerade verlaufenden Schenkel, einem zweiten gerade verlaufenden Schenkel und einem bogenförmigen Verbindungsabschnitt, der die beiden Schenkel verbindet, besteht, nach Anspruch 1.

Die Vorrichtung umfasst:
Eine erste Schwenkeinheit mit einer ersten Schenkelaufnahme. Die erste Schenkelaufnahme ist um eine erste Schwenkachse auf einer ersten Kreisbahn schwenkbar ausgebildet. Die erste Schenkelaufnahme ist zur klemmenden Aufnahme des ersten Schenkels des Leiterstücks ausgebildet.

Eine zweite Schwenkeinheit mit einer zweiten Schenkelaufnahme. Die zweite Schenkelaufnahme ist um eine zweite Schwenkachse auf einer zweiten Kreisbahn schwenkbar ausgebildet. Die zweite Schenkelaufnahme ist zur klemmenden Aufnahme des zweiten Schenkels des Leiterstücks ausgebildet.

Die erste und die zweite Schenkelaufnahme sind in gleiche Schwenkrichtung auf den jeweiligen Kreisbahnen voneinander wegschwenkbar.

Die Vorrichtung umfasst weiter eine Führungseinrichtung. Die Führungseinrichtung umfasst ein erstes Führungselement und ein zweites Führungselement. Dabei weist das erste Führungselement eine erste formgebende Fläche und das zweite Führungselement eine zweite formgebende Fläche auf.

Die beiden Führungselemente sind derart angeordnet oder können derart angeordnet werden, dass der bogenförmige Verbindungsabschnitt eines umzuformenden Leiterstücks oder mehrerer umzuformender Leiterstücke in dessen bzw. deren Ausgangszustand zwischen den beiden Führungselementen derart anordenbar ist bzw. sind, dass diese, insbesondere in vertikaler Richtung, zwischen den formgebenden Flächen (geführt oder mit diesen beweglich sind.

Sollen mehrere Leiterstücke gebogen bzw. umgeformt werden, werden diese nebeneinander zwischen den beiden Führungselementen bzw. zwischen den beiden formgebenden Flächen angeordnet. Die formgebenden Flächen können als plane Flächen ausgebildet sein.

Bevorzugterweise kann das erste Führungselement und das zweite Führungselement relativ zueinander aufeinander zuund wegbewegt werden. Damit kann der Abstand zwischen den beiden Führungselementen und damit auf zwischen den beiden formgebenden Flächen variiert werden. So kann abhängig von der Dicke eines Leiterstücks und/oder der Anzahl mehrerer nebeneinander angeordneter Leiterstücke der Abstand insbesondere zwischen den beiden vorgegebenen Flächen entsprechend eingestellt werden. Dazu können die beiden Führungselemente innerhalb derselben Ebene, insbesondere der horizontalen Ebene, bewegbar bzw. verschiebbar sein.

Die Vorrichtung umfasst eine erste Führungsfläche. Die erste Führungsfläche kann insbesondere gekrümmt ausgebildet und vorzugsweise am ersten Führungselement angeordnet sein. Die erste Führungsfläche ist derart angeordnet und ausgebildet, dass beim Verschwenken der ersten Schwenkeinheit ein Umformabschnitt des ersten Schenkels gegen die erste Führungsfläche gebogen wird, so dass ein Konturverlauf der ersten Führungsfläche dem Umformabschnitt des ersten Schenkels zumindest teilweise aufgeprägt wird.

Dabei erstreckt sich der Umformabschnitt des ersten Schenkels von dem in der ersten Schenkelaufnahme aufgenommen Teil des ersten Schenkels in Richtung des Verbindungsabschnitts.

Bevorzugterweise kann die Vorrichtung eine zweite Führungsfläche umfassen. Die zweite Führungsfläche kann insbesondere gekrümmt ausgebildet und vorzugsweise am zweiten Führungselement angeordnet sein. Die zweite Führungsfläche kann derart angeordnet und ausgebildet sein, dass beim Verschwenken der zweiten Schwenkeinheit ein Umformabschnitt des zweiten Schenkels gegen die zweite Führungsfläche gebogen wird, so dass ein Konturverlauf der zweiten Führungsfläche dem Umformabschnitt des zweiten Schenkels zumindest teilweise aufgeprägt wird.

Dabei erstreckt sich der Umformabschnitt des zweiten Schenkels von dem in der zweiten Schenkelaufnahme aufgenommen Teil des zweiten Schenkels in Richtung des Verbindungsabschnitts.

Die beiden Führungsflächen können verschiedene Geometrien aufweisen. So ist beispielsweise eine Kontur der ersten und/oder der zweiten Führungsfläche denkbar, die eine Kante aufweist. Damit könnte beispielsweise ein Knick auf den Umformabschnitt des ersten bzw. des zweiten Schenkels des Leiterstücks aufgeprägt werden.

Bevorzugterweise kann die Vorrichtung mindestens ein Formelement umfassen. Das Formelement kann eine Anpressfläche aufweisen. Das Formelement kann derart angeordnet und ausgestaltet sein, dass es mit seiner Anpressfläche an den Umformabschnitt des ersten Schenkels oder an den Umformabschnitt des zweiten Schenkels angepresst werden kann, so dass ein Konturverlauf der Anpressfläche dem Umformabschnitt des ersten Schenkels oder dem Umformabschnitt des zweiten Schenkels (16) zumindest teilweise aufgeprägt wird. Die Geometrie der Anpressfläche kann gekrümmt ausgestaltet sein und/oder beispielsweise Ecken und/oder Kanten aufweisen.

Bevorzugterweise kann das Formelement derart angeordnet und ausgestaltet sein, dass die Anpressfläche des Formelements und die erste Führungsfläche oder die Anpressfläche des Formelements und die zweite Führungsfläche relativ zueinander aufeinander zu- und wegbewegbar sind. Damit kann die Angriffsfläche an ein bereits an der ersten bzw. der zweiten Führungsfläche gebogenen um vom Abschnitt des ersten bzw. des zweiten Schenkels angepasst werden. Die Anpressfläche, die erste Führungsfläche und/oder die zweite Führungsfläche können hierzu innerhalb parallelen Ebenen, insbesondere innerhalb derselben Ebene, bewegbar bzw. verschiebbar angeordnet sein. Dies können beispielsweise Horizontalebenen und insbesondere dieselbe Horizontalebene sein.

Bevorzugterweise kann erste Schwenkeinheit derart angeordnet und ausgestaltet sein, dass die erste Schwenkeinheit auf einer parallel zur ersten Schwenkachse gerichteten Richtung bewegbar ausgebildet ist.

Auch die zweite Schwenkeinheit kann derart angeordnet und ausgestaltet sein, dass die zweite Schwenkeinheit auf einer parallel zur zweiten Schwenkachse gerichteten Richtung bewegbar ausgebildet ist.

Eine parallel zu der jeweiligen Schwenkachse gerichtete Bewegung der ersten und/oder der zweiten Schwenkeinheit kann beispielsweise mittels einer wendelartigen Rampe und eines darauf rollenden und an der ersten und/oder an der zweiten Schwenkeinheit angeordneten Rolle bzw. eines angeordneten Radelements realisiert werden. Es ist aber auch eine sich in parallel zu der jeweiligen Schwenkachse erstreckender Richtung erstreckende Kulissenbahn zur Führung der ersten und/oder der zweiten Schwenkeinheit denkbar.

Die obige Aufgabe wird weiter durch ein Verfahren nach Anspruch 7 zum Biegen mindestens eines in einem Ausgangszustand U-förmigen Leiterstücks, das aus einem ersten gerade verlaufenden Schenkel, einem zweiten gerade verlaufenden Schenkel und einem bogenförmigen Verbindungsabschnitt, der die beiden Schenkel verbindet, besteht, nach dem nebengeordneten Anspruch gelöst, wobei das Verfahren die folgenden Schritte umfasst:
Anordnen des bogenförmigen Verbindungsabschnitts innerhalb einer Führungseinrichtung. Bei mehreren Leiterstücken werden diese nebeneinander angeordnet, so dass auch die Verbindungsabschnitte entsprechend nebeneinander angeordnet werden.

Klemmend fixiertes Aufnehmen des ersten Schenkels in einer ersten Schenkelaufnahme.

Klemmend fixiertes Aufnehmen des zweiten Schenkels in einer zweiten Schenkelaufnahme.

Verschwenken des in der ersten Schenkelaufnahme aufgenommenen Teils des ersten Schenkels auf einer ersten Kreisbahn um eine erste Schwenkachse in eine Schwenkrichtung.

Verschwenken des in der zweiten Schenkelaufnahme aufgenommenen Teils des zweiten Schenkels auf einer zweiten Kreisbahn um eine zweite Schwenkachse in die Schwenkrichtung, wobei der bogenförmige Verbindungsabschnitt des Leiterstücks verformt und, insbesondere in vertikaler Richtung, parallel zu den Schwenkachsen verlagert wird, wobei ein Teil des Verbindungsabschnitts in seiner Orientierung durch die Führungseinrichtung festgehalten wird.

Es ist insbesondere die Umformung mehrerer Leiterstücke in einem Verfahrensvorgang vorgesehen. Die Leiterstücke sind dabei im Ausgangszustand nebeneinander angeordnet. Die Verbindungsabschnitte sind also bspw. in der Horizontalebene nebeneinander angeordnet. Die mehreren Leiterstücke sind im Ausgangszustand bezogen auf die Geometrie des Verbindungsabschnitts gleich ausgebildet. Die mehreren Leiterstücke bilden beim Umformen eine Leiterstückpaket, das quasi wie ein einzelnes Leiterstück umgeformt wird, die Leiterstücke des Leiterstückpakets bewegen sich dabei relativ zueinander. Wenn im Folgenden also von dem Umformen eines Leiterstücks gesprochen wird, so ist damit auch die Umformung eines Leiterstückpakets gemeint. Die entsprechenden Ausführungen zu den Ausbildungen des Verfahrens gelten daher auch für das Umformen eines Leiterstückpakets.

Teil der Erfindung ist also insbesondere ein Verfahren zum zeitgleichen Biegen mehrerer Leiterstücke, die ein Leiterstückpaket bilden, wobei die einzelnen Leiterstücke und auch das Leiterstückpaket in einem Ausgangszustand U-förmig ausgebildet sind. Wobei sie weiter aus einem ersten gerade verlaufenden Schenkel und einem zweiten gerade verlaufenden Schenkel und einem bogenförmigen Verbindungsabschnitt, der die beiden Schenkel verbindet, bestehen. Das Verfahren umfasst die folgenden Schritte:
Anordnen des bogenförmigen Verbindungsabschnitts des Leiterstückpakets innerhalb einer Führungseinrichtung.

Wobei die mehreren Leiterstücken nebeneinander angeordnet werden, so dass auch die Verbindungsabschnitte entsprechend nebeneinander angeordnet sind.

Klemmend fixiertes Aufnehmen des ersten Schenkels des Leiterstückpakets in einer ersten Schenkelaufnahme.

Klemmend fixiertes Aufnehmen des zweiten Schenkels des Leiterstückpakets in einer zweiten Schenkelaufnahme.

Verschwenken des in der ersten Schenkelaufnahme aufgenommenen Teils des ersten Schenkels auf einer ersten Kreisbahn um eine erste Schwenkachse in eine Schwenkrichtung.

Verschwenken des in der zweiten Schenkelaufnahme aufgenommenen Teils des zweiten Schenkels auf einer zweiten Kreisbahn um eine zweite Schwenkachse in die Schwenkrichtung, wobei der bogenförmige Verbindungsabschnitt des Leiterstücks verformt und, insbesondere in vertikaler Richtung, parallel zu den Schwenkachsen verlagert wird, wobei ein Teil des Verbindungsabschnitts in seiner Orientierung durch die Führungseinrichtung festgehalten wird. Die Orientierung des festgehaltenen Abschnitts wird also nicht geändert, er muss jedoch hierzu nicht klemmend fixiert sein, sondern lediglich geführt, so dass seine Orientierung unverändert bleibt.

Bei mehreren Leiterstücken können die Verbindungsabschnitte alle gemeinsam in einer Richtung, z. B. vertikale Richtung, bewegt bzw. verschoben werden. Sie können auch in eine orthogonal zu dieser Richtung angeordneten Richtung, z. B. Horizontalrichtung, bewegt bzw. verschoben werden. Dabei werden die Verbindungsabschnitte unterschiedlich weit entlang der Horizontalrichtung bewegt bzw. verschoben.

Vorliegend ist mit klemmend fixiert gemeint, dass der in den jeweiligen Schenkelaufnahmen aufgenommene Teil der Schenkel insbesondere während des Biegens in seiner Form und Ausrichtung fixiert bzw. festgehalten wird und nicht gebogen bzw. verformt wird. Es ist keine Relativbewegung zwischen klemmend fixiertem Teil des Schenkels und der Schenkelaufnahme möglich. Dies kann mittels Klemmelementen bzw. Klemmbacken realisiert werden.

Erfindungsgemäß wird beim Verschwenken des in der ersten Schenkelaufnahme aufgenommenen Teils des ersten Schenkels ein Umformabschnitt des ersten Schenkels gegen eine erste Führungsfläche gebogen werden, so dass ein Konturverlauf der ersten Führungsfläche dem Umformabschnitt des ersten Schenkels zumindest teilweise aufgeprägt wird.

Der Umformabschnitt des ersten Schenkels erstreckt sich von dem in der ersten Schenkelaufnahme aufgenommen Teil des ersten Schenkels in Richtung des Verbindungsabschnitts.

Bevorzugterweise kann beim Verschwenken des in der zweiten Schenkelaufnahme aufgenommenen Teils des zweiten Schenkels ein Umformabschnitt des zweiten Schenkels gegen eine zweite Führungsfläche gebogen werden, so dass ein Konturverlauf der zweiten Führungsfläche dem Umformabschnitt des zweiten Schenkels zumindest teilweise aufgeprägt wird.

Der Umformabschnitt des zweiten Schenkels erstreckt sich von dem in der zweiten Schenkelaufnahme aufgenommen Teil des zweiten Schenkels in Richtung des Verbindungsabschnitts.

Bevorzugterweise kann während des Verschwenkens der Verbindungsabschnitt in Richtung des in der ersten Schenkelaufnahme aufgenommenen Teils des ersten Schenkels bzw. in Richtung des in der zweiten Schenkelaufnahme aufgenommenen Teils des zweiten Schenkels bewegt werden. Zumindest ein Teil des Verbindungsabschnitts kann in seiner Orientierung durch die Führungseinrichtung festgehalten wird. Mit anderen Worten, dieser Teil wird nicht verschwenkt.

Bevorzugterweise kann beim Verschwenken des in der ersten Schenkelaufnahme aufgenommenen Teils des ersten Schenkels die erste Schenkelaufnahme entlang einer zur ersten Schwenkachse paralleler, insbesondere vertikaler, Richtung bewegt werden.

Ebenso kann beim Verschwenken des in der zweiten Schenkelaufnahme aufgenommenen Teils des zweiten Schenkels die zweite Schenkelaufnahme entlang einer zur zweiten Schwenkachse paralleler, insbesondere vertikaler, Richtung bewegt werden.

Bevorzugterweise kann das Verfahren weiter den Schritt umfassen:
Anpressen einer Anpressfläche an den Umformabschnitt des ersten Schenkels und/oder an den Umformabschnitt des zweiten Schenkels, so dass ein Konturverlauf der Anpressfläche zumindest teilweise dem Umformabschnitt des ersten Schenkels und/oder dem Umformabschnitt des zweiten Schenkels aufgeprägt wird.

Bevorzugterweise kann bei der Durchführung des Verfahrens eine Vorrichtung nach einem der Ansprüche 1 bis 7 verwendet werden.

Weitere Merkmale, Einzelheiten und Vorteile der Erfindung ergeben sich aus dem Wortlaut der Ansprüche sowie aus der folgenden Beschreibung des Ausführungsbeispiels anhand der Zeichnungen. Es zeigen:
- Fig. 1: eine Seitenansicht auf ein Leiterstück in einem Ausgangszustand;
- Fig. 2: eine Draufsicht einer erfindungsgemäßen Vorrichtung in einem Ausgangszustand;
- Fig. 3: eine perspektivische Ansicht auf eine Vorrichtung gemäß Fig. 2;
- Fig. 4: eine Draufsicht einer Vorrichtung gemäß Fig. 2 in einem verschwenkten Zustand und
- Fig. 5: eine Draufsicht auf drei mittels der Vorrichtung gebogenen Leiterstücke.

In der nachfolgenden Beschreibung sowie in den Figuren tragen sich entsprechende Bauteile und Elemente gleiche Bezugszeichen. Der besseren Übersichtlichkeit wegen sind nicht in allen Figuren sämtliche Bezugszeichen wiedergegeben.

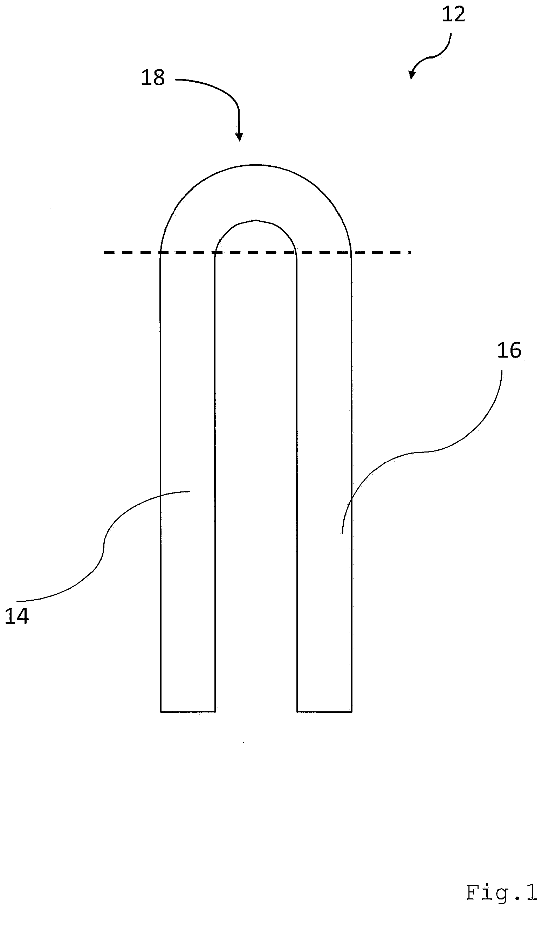

Figur 1 zeigt eine Seitenansicht auf ein Leiterstück 12 in einem Ausgangszustand. Das Leiterstück ist im Ausgangszustand U-förmig ausgestaltet. Es weist einen ersten Schenkel 14 und einen zweiten Schenkel 16 auf. Diese sind jeweils über einen bogenförmigen Verbindungsabschnitt 18 miteinander verbunden. Der Verbindungsabschnitt 18 liegt oberhalb der in Figur 1 durch eine unterbrochene Linie gezeigten Grenze zu den Schenkeln 14 und 16.

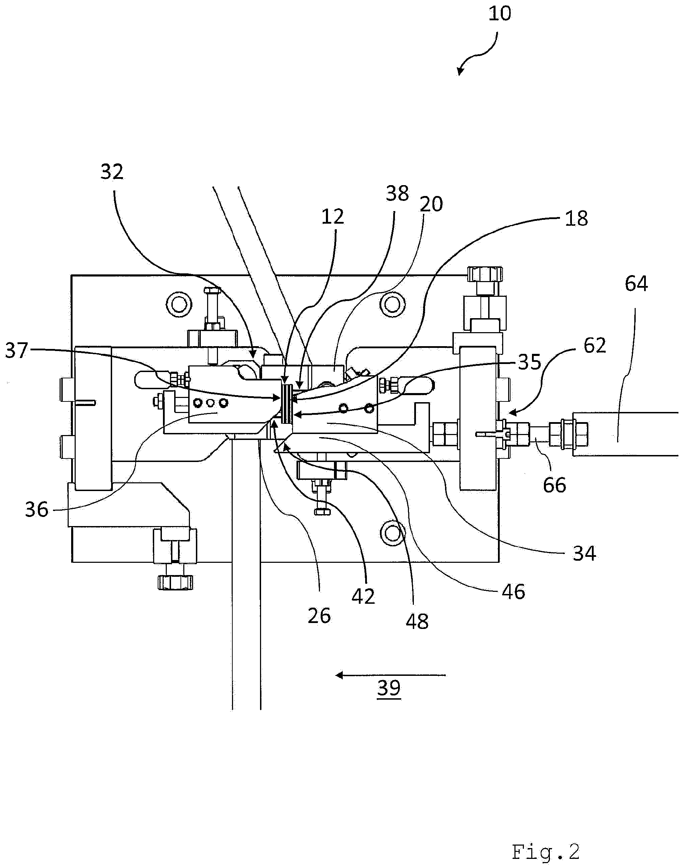

Figur 2 zeigt eine Draufsicht einer erfindungsgemäßen Vorrichtung 10 in einem Ausgangszustand. Vorliegend sind drei Leiterstücke 12 im U-förmigen Ausgangszustand in der Vorrichtung 10 aufgenommen dargestellt.

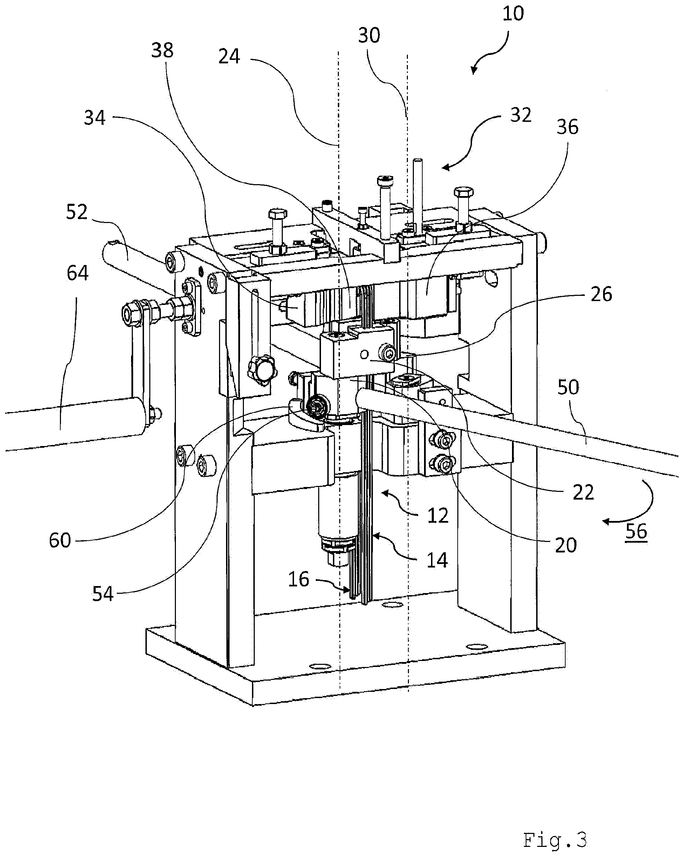

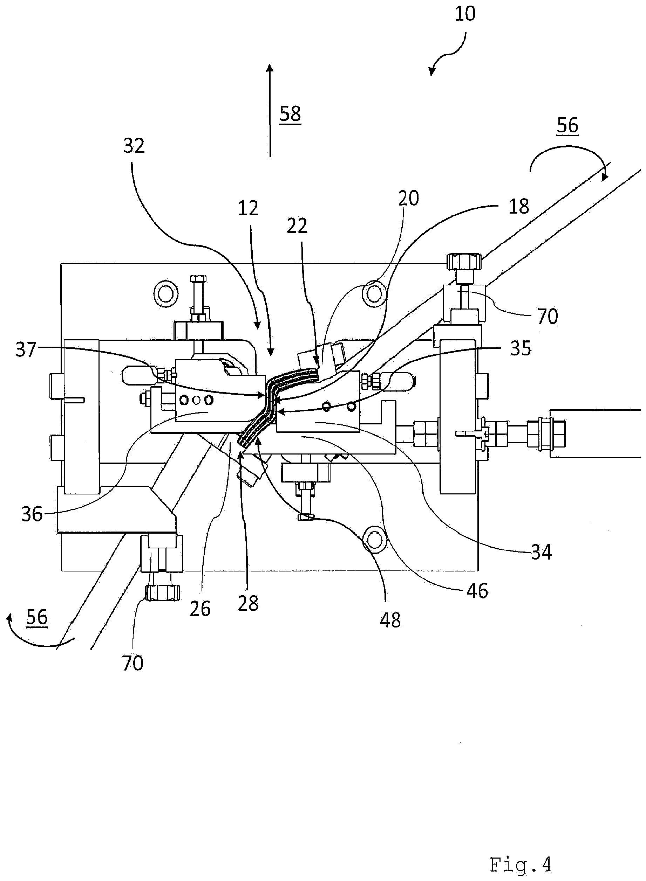

Die Vorrichtung 10 weist eine erste Schwenkeinheit 20 und eine zweite Schwenkeinheit 26 auf. Die erste Schwenkeinheit 20 weist eine erste Schenkelaufnahme 22 auf und die zweite Schwenkeinheit 26 weist eine zweite Schenkelaufnahme 28 auf (siehe hierzu Figur 3 und 4).

Die drei Leiterstücke 12 sind mit ihren ersten Schenkeln 14 in der ersten Schenkelaufnahme 22 und mit ihren zweiten Schenkeln 16 in der zweiten Schenkelaufnahme 28 klemmend fixiert aufgenommen.

Die Vorrichtung 10 weist eine Führungseinrichtung 32 auf. Diese besteht vorliegend aus zwei Führungselementen: einem ersten Führungselement 34 und einem zweiten Führungselement 36.

Die Vorrichtung 10 weist weiter eine erste formgebende Fläche 35 und eine erste Führungsfläche 38 auf, wobei die erste formgebende Fläche 35 und die erste Führungsfläche 38 beide an dem ersten Führungselement 34 angeordnet sind.

Die Vorrichtung 10 weist weiter eine zweite formgebende Fläche 37 und eine zweite Führungsfläche 42 auf, wobei die zweite formgebende Fläche 37 und die zweite Führungsfläche 42 beide an dem zweiten Führungselement 34 angeordnet sind.

Vorliegend sind die formgebenden Flächen 35,37 als plane Flächen ausgestaltet und die Führungsflächen 38,42 sind gekrümmt ausgestaltet.

Vor dem Biegen der Leiterstücke 12 werden diese bzw. die Führungselemente 34, 36 derart angeordnet und gegeneinander ausgerichtet, dass die formgebenden Flächen 35, 37 zumindest teilweise den Seiten der beiden seitlichen Leiterstücke 12 bündig anliegen. Vorliegend werden die beiden Führungselemente 34, 36 derart angeordnet, dass die beiden formgebenden Führungsflächen 35,37 parallel zueinander ausgerichtet sind.

Dazu sind die beiden Führungselement 34, 36 beweglich entlang der Führungsrichtung 39 angeordnet. Sie können entlang der Führungsrichtung 39 aufeinander zu und voneinander wegbewegt werden. Dabei ist die Relativbewegung beider Führungselemente 34, 36 gemeint, sodass beispielsweise das erste Führungselement 34 festgehalten werden kann während das zweite Führungselement 36 bewegt wird, oder umgekehrt, oder beide Führungselement 34,36 gleichzeitig bewegt werden.

Zudem weist die Vorrichtung 10 ein Formelement 46 mit einer Anpressfläche 48 auf. Das Formelement 46 ist ebenfalls entlang der Führungsrichtung 39 bewegbar angeordnet. Dies ist vorliegend mittels einem Schraubgewinde 62 in welches mittels einer Kurbel 64 eine Gewindestange 66, an der das Formelement 46 angeordnet ist, rein- oder rausgedreht wird.

Figur 3 zeigt eine perspektivische Ansicht auf eine Vorrichtung 10 gemäß Figur 2. auch hier befindet sich die Vorrichtung 10 im Ausgangszustand, d. h. vor dem Biegen der Leiterstücke 12 bzw. vor dem Verschwenken der beiden Schwenkeinheiten 20 bzw. 26.

Die erste Schwenkeinheit 20 ist auf einer Kreisbahn um eine erste Schwenkachse 24 schwenkbar angeordnet. Die zweite Schwenkeinheit 26 ist auf einer zweiten Schwenkachse 30 auf einer Kreisbahn schwenkbar angeordnet. Die beiden Schwenkachsen 24 und 30 sind mittels zweier gestrichelter Linien angedeutet.

Die beiden Schwenkeinheiten 20, 26 können beispielsweise manuell durch eine Bedienperson mittels eines ersten Hebels 50 und eines zweiten Hebels 52 geschwenkt werden.

Vorliegend ist die erste Schwenkeinheit 20 entlang der ersten Schwenkachse 24 bewegbar angeordnet. Dazu weist die erste Schwenkeinheit 20 eine Rolle 54 auf. Die Rolle 54 läuft während des Verschwenkens der ersten Schwenkeinheit 20 in die Schwenkrichtung 56 auf einer spiralartig ansteigenden Rampe 60. Somit rollt die Rolle 54 die Rampe 60 hinauf und bewegt die erste Schwenkeinheit 20 in vertikaler Richtung mit.

Vorliegend ist die zweite Schwenkeinheit 26 unbeweglich in vertikaler Richtung, also parallel zur zweiten Schwenkachse 30, ausgestaltet. Es ist allerdings denkbar, dass die zweite Schwenkeinheit 26 ebenfalls, analog zur ersten Schwenkeinheit 20, in vertikaler Richtung bewegbar ausgestaltet ist.

Vorliegend sind die beiden Schwenkachsen 24, 30 parallel und beabstandet zueinander angeordnet.

Zum Biegen der Leiterstücke 12 werden die beiden Schwenkeinheiten 20, 26 mittels der Hebel 50,52 in Schwenkrichtung 56 geschwenkt. Dadurch werden die in den beiden Schenkelaufnahmen 22,28 klemmend fixiert aufgenommenen Schenkel 14 bzw. 16 auf der jeweiligen Kreisbahn um die Schwenkachsen 24,30 bewegt.

Da die erste Schwenkeinrichtung 20 mittels der Rolle 54 und der Rampe 60 während des Verschwenkens eine Aufwärtsbewegung entlang der ersten Schwenkachse 24 vollzieht, überträgt sich diese Aufwärtsbewegung ebenfalls auf die erste Schenkelaufnahme 22 und die darin klemmend fixiert aufgenommenen ersten Schenkel 14 der Leiterstücke 12 übertragen.

Figur 4 zeigt eine Draufsicht einer Vorrichtung 10 gemäß Fig. 2 in einem verschwenkten Zustand. Die Schwenkeinheiten 20, 26 sind aus dem in Fig. 2 gezeigten Ausgangszustand jeweils in Schwenkrichtung 56 geschwenkt worden. Wie hieraus ersichtlich sind die Schenkel 14 bzw. 16 mit den Schwenkeinheiten 20,26 bzw. deren Schenkelaufnahmen 22,28 mit geschwenkt worden. Dabei wurden die Leiterstücke 12 und insbesondere deren Schenkel 14, 16 an den beiden Führungsflächen 38,42 gebogen.

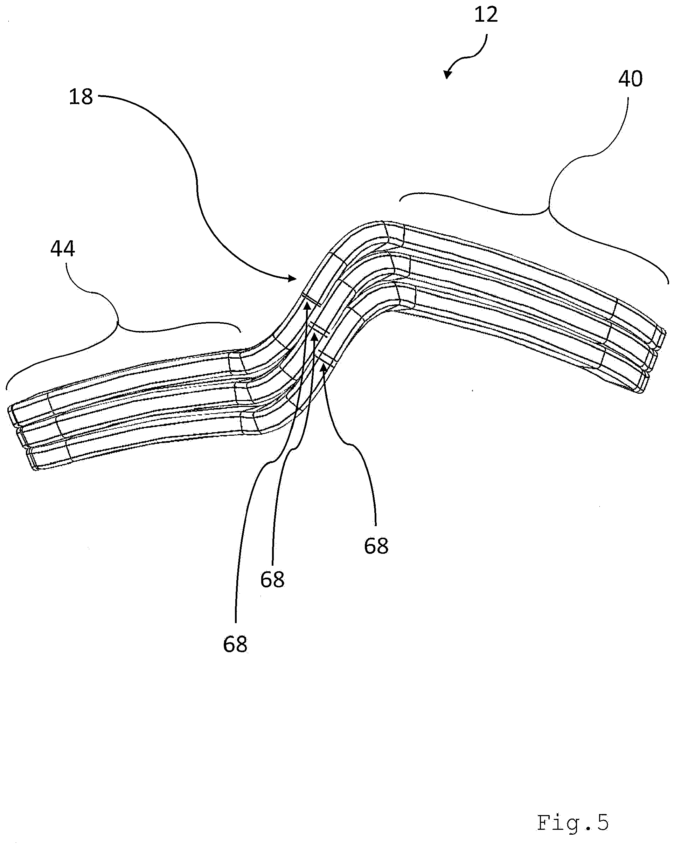

Die Kontur der ersten Führungsfläche 38 wurde dabei einem Umformabschnitt 40 der ersten Schenkel 14 aufgeprägt und der Konturverlauf der zweiten Führungsschwäche 42 wurde einem Umformabschnitt 44 der zweiten Schenkel 16 aufgeprägt. Der Übersicht halber sind die beiden Umformabschnitte 40,44 in Figur 5 bezeichnet.

Nach dem Verschwenken der beiden Schwenkeinheiten 20, 26 werden diese in ihrer verschwenkten Position arretiert, da diese sonst zurück entgegen der Schwenkrichtung 56 zurückfedern könnten. Dies wird vorliegend mittels Stopper 70 realisiert, die hinter die Hebel 50,52 greifen und diese vor einem Zurückschwingen hindern.

Nach dem Verschwenken der beiden Schwenkeinheiten 20, 26 wird das Formelement 46 in Führungsrichtung 39 verschoben, sodass die Anpressfläche 48 auf den Umformabschnitt 44 der zweiten Schenkel 16 der Leiterstücke 12 gepresst wird. Dabei wird die Kontur der Angriffsfläche 48 auf den Umformabschnitt 44 übertragen. Damit entspricht die Verformung des Umformabschnitts 44 der zweiten Schenkel 16 einer Überlagerung der Konturen der Angriffsfläche 48 und der zweiten Führungsfläche 42.

Während des Verschwenkens bzw. des Biegens der Leiterstücke 12 verschieben sich die Verbindungsabschnitte 18, die zwischen den formgebenden Flächen 35,37 angeordnet sind, parallel zu den Schwenkachsen 24,30, in vertikaler Richtung nach unten. Dies entspricht in Figur 3 einer in die Zeichnungsebene hineinzeigenden Richtung.

Diese vertikale Verschiebung in vertikaler Richtung wird gleichermaßen von allen Verbindungsabschnitten 18 durchgeführt. Zusätzlich hierzu verschieben sich jedoch die einzelnen Verbindungsabschnitte 18 der jeweiligen Leiterstücke 12 in einer Orientierungsrichtung 58. Diese ist senkrecht zu der oben beschriebenen, in die Zeichnungsebene der Figur 4 hineinzeigenden Richtung gerichtet.

Die Verschiebung der Verbindungsabschnitte 18 entlang der Orientierungsrichtung 58 ist für die einzelnen Verbindungsabschnitte 18 unterschiedlich. Die Verbindungsabschnitte 18 verschieben sich zwischen den formgebenden Flächen 35,37, die für die Verbindungsabschnitte 18 eine Führung entlang der Orientierungsrichtung 58 darstellen.

Diese Verschiebung resultiert daraus, dass mehrere Leiterstücke 12 nebeneinander angeordnet und gebogen werden. Je mehr Leiterstücke 12 nebeneinander angeordnet und gebogen werden, desto größer fällt der Versatz zwischen den Verschiebungen des in Figur 4 äußerst links dargestellten Leiterstücks 12 mit dem in Figur 4 äußerst rechts dargestellten Leiterstück 12.

Durch das Auseinanderziehen der ersten und der zweiten Schenkel 14, 16 der Leiterstücke 12 durch das oben beschriebene Verschwenken müssen die Verbindungsabschnitte 18 in Richtung der Schenkel 14,16 bewegt werden und/oder die Schenkel 14,16 in Richtung der Verbindungsabschnitte 18 bewegt werden um einen Längenausgleich herzustellen.

Vorliegend wird dies mittels zwei Bewegungen realisiert. Zum einen bewegen sich die Verbindungsabschnitte 18 in Richtung der beiden Schenkel 14,16 zwischen den beiden Führungselementen 34,36, indem die Verbindungsabschnitte 18 in Richtung der beiden Schenkel 14, 16 und insbesondere durch die formgebenden Flächen 35,37 geführt durchrutschen. Zum anderen wird die erste Schwenkeinheit 20 mittels der oben beschriebenen Rampe 60 und damit auch die ersten Schenkel 14 der Leiterstücke 12 in Richtung des Verbindungsabschnitte 18 bewegt.

Figur 5 zeigt eine Draufsicht auf drei mittels der Vorrichtung 10 gebogenen Leiterstücke 12. Es sind die Verbindungsabschnitte 18 und jeweiligen Umformabschnitte 40,44 der Schenkel 14,16 dargestellt.

An den Verbindungsabschnitten 18 sind Mittelbereiche 68 jeweils durch Striche angedeutet. Diese entsprechen im in Figur 1 dargestellten, U-förmigen Ausgangszustand der Leiterstücke 12 einander und liegen auf einer Linie. Nach dem Biegen der Leiterstücke 12 sind die Verbindungsabschnitte 18 gegeneinander verschoben, was an den verschobenen Mittelbereichen 68 erkennbar ist.

### Bezugszeichenliste

- 10: Vorrichtung
- 12: Leiterstück
- 14: erster Schenkel
- 16: zweiter Schenkel
- 18: Verbindungsabschnitt
- 20: erste Schwenkeinheit
- 22: erste Schenkelaufnahme
- 24: erste Schwenkachse
- 26: zweite Schwenkeinheit
- 28: zweite Schenkelaufnahme
- 30: zweite Schwenkachse
- 32: Führungseinrichtung
- 34: erstes Führungselement
- 35: erste formgebende Fläche
- 36: zweites Führungselement
- 37: zweite formgebende Fläche
- 38: erste Führungsfläche
- 39: Führungsrichtung
- 40: Umformabschnitt des ersten Schenkels
- 42: zweite Führungsfläche
- 44: Umformabschnitt des zweiten Schenkels
- 46: Formelement
- 48: Anpressfläche
- 50: erster Hebel
- 52: zweiter Hebel
- 54: Rolle
- 56: Schwenkrichtung
- 58: Orientierungsrichtung
- 60: Rampe
- 62: Schraubgewinde
- 64: Kurbel
- 66: Gewindestange
- 68: Mittelbereich des Verbindungsabschnitts
- 70: Stopper

## Patentansprüche

1. Vorrichtung (10) zum Biegen mindestens eines in einem Ausgangszustand U-förmigen Leiterstücks (12), das in einem Ausgangszustand aus einem ersten gerade verlaufenden Schenkel (14), einem zweiten gerade verlaufenden Schenkel (16) und einem bogenförmigen Verbindungsabschnitt (18), der die beiden Schenkel (14, 16) verbindet, besteht, wobei das Leiterstück (12) dafür geeignet ist, in einem Statorkern eingesetzt zu werden, wobei die Vorrichtung (10) umfasst:
- eine erste Schwenkeinheit (20) mit einer ersten Schenkelaufnahme (22), die um eine erste Schwenkachse (24) auf einer ersten Kreisbahn schwenkbar ausgebildet ist und zur klemmenden Aufnahme des ersten Schenkels (14) des Leiterstücks (12) ausgebildet ist,
- eine zweite Schwenkeinheit (26) mit einer zweiten Schenkelaufnahme (28), die um eine zweite Schwenkachse (30) auf einer zweiten Kreisbahn schwenkbar ausgebildet ist und zur klemmenden Aufnahme des zweiten Schenkels (16) des Leiterstücks (12) ausgebildet ist,
- wobei die erste Schenkelaufnahme (22) und die zweite Schenkelaufnahme (28) in gleiche Schwenkrichtung (56), beide im Uhrzeigersinn oder beide gegen den Uhrzeigersinn, auf den jeweiligen Kreisbahnen voneinander wegschwenkbar sind,
- eine Führungseinrichtung (32) umfassend ein erstes Führungselement (34) mit einer ersten formgebenden Fläche (35) und ein zweites Führungselement (36) mit einer zweiten formgebenden Fläche (37),
- wobei die beiden Führungselemente (34, 36) derart angeordnet oder anordenbar sind, dass der bogenförmige Verbindungsabschnitt (18) eines umzuformenden Leiterstücks (12) oder mehrerer nebeneinander anzuordnender umzuformender Leiterstücke (12) in dessen bzw. deren Ausgangszustand zwischen den beiden Führungselementen (34, 36) derart anordenbar ist bzw. sind, dass diese, zwischen den formgebenden Flächen (35, 37) geführt oder mit diesen beweglich sind, wobei die Vorrichtung (10) eine erste Führungsfläche (38) umfasst,
wobei die erste Führungsfläche (38) derart angeordnet und ausgebildet ist, dass beim Verschwenken der ersten Schwenkeinheit (20) ein Umformabschnitt (40) des ersten Schenkels (14), der sich von dem in der ersten Schenkelaufnahme (22) aufgenommen Teil des ersten Schenkels (14) in Richtung des Verbindungsabschnitts (18) erstreckt, gegen die erste Führungsfläche (38) gebogen wird, so dass ein Konturverlauf der ersten Führungsfläche (38) dem Umformabschnitt (40) des ersten Schenkels (14) zumindest teilweise aufgeprägt wird.

2. Vorrichtung (10) nach Anspruch 1, **dadurch gekennzeichnet, dass** das erste Führungselement (34) und das zweite Führungselement (36) relativ zueinander aufeinander zu- und wegbewegbar, insbesondere entlang einer Führungsrichtung (39), sind.

3. Vorrichtung (10) nach einem der voranstehenden Ansprüche, **dadurch gekennzeichnet, dass** die Vorrichtung (10) eine zweite Führungsfläche (42), die insbesondere gekrümmt ausgebildet und vorzugsweise am zweiten Führungselement (36) angeordnet ist, umfasst, wobei die zweite Führungsfläche (42) derart angeordnet und ausgebildet ist, dass beim Verschwenken der zweiten Schwenkeinheit (26) ein Umformabschnitt (44) des zweiten Schenkels (16), der sich von dem in der zweiten Schenkelaufnahme (28) aufgenommen Teil des zweiten Schenkels (16) in Richtung des Verbindungsabschnitts (18) erstreckt, gegen die zweite Führungsfläche (42) gebogen wird, so dass ein Konturverlauf der zweiten Führungsfläche (42) dem Umformabschnitt (44) des zweiten Schenkels (16) zumindest teilweise aufgeprägt wird.

4. Vorrichtung (10) nach einem der voranstehenden Ansprüche, **dadurch gekennzeichnet, dass** die Vorrichtung (10) mindestens ein Formelement (46) umfasst, welches eine Anpressfläche (48) aufweist, wobei das Formelement (46) derart angeordnet und ausgestaltet ist, dass es mit seiner Anpressfläche (48) an den Umformabschnitt (40) des ersten Schenkels (14) oder an den Umformabschnitt (44) des zweiten Schenkels (16), insbesondere durch eine Bewegung des Formelements (46) entlang der Führungsrichtung (39), angepresst werden kann, so dass ein Konturverlauf der Anpressfläche (48) dem Umformabschnitt (40) des ersten Schenkels (14) oder dem Umformabschnitt (44) des zweiten Schenkels (16) zumindest teilweise aufgeprägt wird.

5. Vorrichtung (10) nach Anspruch 4, **dadurch gekennzeichnet, dass** das Formelement (46) derart angeordnet und ausgestaltet ist, dass die Anpressfläche (48) des Formelements (46) und die erste Führungsfläche (38) oder
die Anpressfläche (48) des Formelements (46) und die zweite Führungsfläche (42)
relativ zueinander aufeinander zu- und wegbewegbar sind.

6. Vorrichtung (10) nach einem der voranstehenden Ansprüche, **dadurch gekennzeichnet, dass** die erste Schwenkeinheit (20) derart angeordnet und ausgestaltet ist, dass die erste Schwenkeinheit (20) auf einer parallel zur ersten Schwenkachse (24) gerichteten Richtung bewegbar ausgebildet ist
und/oder
dass die zweite Schwenkeinheit (26) derart angeordnet und ausgestaltet ist, dass die zweite Schwenkeinheit (26) auf einer parallel zur zweiten Schwenkachse (30) gerichteten Richtung bewegbar ausgebildet ist.

7. Verfahren zum Biegen mindestens eines in einem Ausgangszustand U-förmigen Leiterstücks (12) oder eines Leiterstückpakets, das mehrere nebeneinanderliegend angeordnete Leiterstücke (12) umfasst, das aus einem ersten gerade verlaufenden Schenkel (14), einem zweiten gerade verlaufenden Schenkel (16) und einem bogenförmigen Verbindungsabschnitt (18), der die beiden Schenkel (14, 16) verbindet, besteht, wobei das Leiterstück (12) dafür geeignet ist, in einem Statorkern eingesetzt zu werden, wobei die Leiterstücke (12) des Leiterstückpakets mit identischem Verbindungsabschnitt (18) ausgebildet sind, wobei das Verfahren die folgenden Schritte umfasst:
- Anordnen des bogenförmigen Verbindungsabschnitts (18) innerhalb einer Führungseinrichtung (32),
- klemmend fixiertes Aufnehmen des ersten Schenkels (14) in einer ersten Schenkelaufnahme (22),
- klemmend fixiertes Aufnehmen des zweiten Schenkels (16) in einer zweiten Schenkelaufnahme (28),
- Verschwenken des in der ersten Schenkelaufnahme (22) aufgenommenen Teils des ersten Schenkels (14) auf einer ersten Kreisbahn um eine erste Schwenkachse (24) in eine Schwenkrichtung,
- Verschwenken des in der zweiten Schenkelaufnahme (28) aufgenommenen Teils des zweiten Schenkels (16) auf einer zweiten Kreisbahn um eine zweite Schwenkachse (30) in die Schwenkrichtung, wobei die erste Schenkelaufnahme (22) und die zweite Schenkelaufnahme (28) beide im Uhrzeigersinn oder beide gegen den Uhrzeigersinn voneinander wegschwenkbar sind, wobei der bogenförmige Verbindungsabschnitt (18) des Leiterstücks (12) verformt und parallel zu den Schwenkachsen (24, 30) verlagert wird, wobei ein Teil des Verbindungsabschnitts (18) in seiner Orientierung durch die Führungseinrichtung (32) festgehalten wird,
wobei beim Verschwenken des in der ersten Schenkelaufnahme (22) aufgenommenen Teils des ersten Schenkels (14) ein Umformabschnitt (40) des ersten Schenkels (14), der sich von dem in der ersten Schenkelaufnahme (22) aufgenommen Teil des ersten Schenkels (14) in Richtung des Verbindungsabschnitts (18) erstreckt, gegen eine erste Führungsfläche (38) gebogen wird, so dass ein Konturverlauf der ersten Führungsfläche (38) dem Umformabschnitt (40) des ersten Schenkels (14) zumindest teilweise aufgeprägt wird.

8. Verfahren nach Anspruch 7, **dadurch gekennzeichnet, dass** beim Verschwenken des in der zweiten Schenkelaufnahme (28) aufgenommenen Teils des zweiten Schenkels (16) ein Umformabschnitt (44) des zweiten Schenkels (16), der sich von dem in der zweiten Schenkelaufnahme (28) aufgenommen Teil des zweiten Schenkels (16) in Richtung des Verbindungsabschnitts (18) erstreckt, gegen eine zweite Führungsfläche (42) gebogen wird, so dass ein Konturverlauf der zweiten Führungsfläche (42) dem Umformabschnitt (44) des zweiten Schenkels (16) zumindest teilweise aufgeprägt wird.

9. Verfahren nach Anspruch 7 oder 8, **dadurch gekennzeichnet, dass** beim Verschwenken des in der ersten Schenkelaufnahme (22) aufgenommenen Teils des ersten Schenkels (14) die erste Schenkelaufnahme (22) entlang einer zur ersten Schwenkachse (24) parallelen Richtung bewegt wird
und/oder
dass beim Verschwenken des in der zweiten Schenkelaufnahme (28) aufgenommenen Teils des zweiten Schenkels (16) die zweite Schenkelaufnahme (28) entlang einer zur zweiten Schwenkachse (30) parallelen Richtung bewegt wird.

10. Verfahren nach einem der Ansprüche 7 bis 9, **dadurch gekennzeichnet, dass** das Verfahren weiter den Schritt umfasst:
- Anpressen einer Anpressfläche (48) an den Umformabschnitt (40) des ersten Schenkels (14) und/oder an den Umformabschnitt (44) des zweiten Schenkels (16), so dass ein Konturverlauf der Anpressfläche (48) zumindest teilweise dem Umformabschnitt (40) des ersten Schenkels (14) und/oder dem Umformabschnitt (44) des zweiten Schenkels (16) aufgeprägt wird.

11. Verfahren nach einem der Ansprüche 7 bis 10, **dadurch gekennzeichnet, dass** beim Durchführen des Verfahrens eine Vorrichtung nach einem der Ansprüche 1 bis 6 benutzt wird.

## Claims

1. Device (10) for bending at least one conductor element (12) which is U-shaped in an initial state and which, in an initial state, consists of a first straight limb (14), a second straight limb (16) and an arcuate connecting portion (18) which connects the two limbs (14, 16), wherein the conductor element (12) is suitable to be inserted into a stator core, wherein the device (10) comprises:
- a first pivot unit (20) having a first limb-receiving means (22) which is designed to be pivotable about a first pivot axis (24) on a first circular path and which is designed for clampingly receiving the first limb (14) of the conductor element (12),
- a second pivot unit (26) having a second limb-receiving means (28) which is designed to be pivotable about a second pivot axis (30), which is arranged in particular at a distance from the first pivot axis (24), on a second circular path and which is designed for clampingly receiving the second limb (16) of the conductor element (12),
- wherein the first limb-receiving means (22) and the second limb-receiving means (28) can be pivoted away from one another, both in a clockwise or counterclockwise direction, in the same pivoting direction (56) on the respective circular paths,
- a guide assembly (32) comprising a first guide element (34) having a first shaping surface (35) and a second guide element (36) having a second shaping surface (37),
- wherein the two guide elements (34, 36) are arranged or can be arranged in such a way that the arcuate connecting portion (18) of a conductor element (12) to be deformed or of a plurality of conductor elements (12) to be deformed and to be arranged one next to the other, in the initial state thereof, can be arranged between the two guide elements (34, 36) in such a way that said conductor elements are guided between the shaping surfaces (35, 37) or can be moved therewith, in particular in the vertical direction,
wherein the device (10) comprises a first guide surface (38), the first guide surface (38) being arranged and designed in such a way that when the first pivot unit (20) is pivoted, a deformed portion (40) of the first limb (14), which extends from the part of the first limb (14) received in the first limb-receiving means (22) in the direction of the connecting portion (18), is bent against the first guide surface (38), so that a contour of the first guide surface (38) is at least partially impressed on the deformed portion (40) of the first limb (14).

2. Device (10) according to claim 1, **characterized in that** the first guide element (34) and the second guide element (36) can be moved toward and away from one another relative to one another, in particular in a guide direction (39).

3. Device (10) according to any of the preceding claims, **characterized in that** the device (10) comprises a second guide surface (42), which is in particular curved and is preferably arranged on the second guide element (36),
the second guide surface (42) being arranged and designed in such a way that when the second pivot unit (26) is pivoted, a deformed portion (44) of the second limb (16), which extends from the part of the second limb (16) received in the second limb-receiving means (28) in the direction of the connecting portion (18), is bent against the second guide surface (42), so that a contour of the second guide surface (42) is at least partially impressed on the deformed portion (44) of the second limb (16).

4. Device (10) according to any of the preceding claims, **characterized in that** the device (10) comprises at least one shaping element (46) which has a contact surface (48), the shaping element (46) being arranged and designed in such a way that the contact surface (48) thereof can be pressed against the deformed portion (40) of the first limb (14) or against the deformed portion (44) of the second limb (16), in particular by a movement of the shaping element (46) in the guide direction (39), so that a contour of the contact surface (48) is at least partially impressed on the deformed portion (40) of the first limb (14) or the deformed portion (44) of the second limb (16).

5. Device (10) according to claim 4, **characterized in that** the shaping element (46) is arranged and designed in such a way that
the contact surface (48) of the shaping element (46) and the first guide surface (38) or
the contact surface (48) of the shaping element (46) and the second guide surface (42)
can be moved toward and away from one another relative to one another.

6. Device (10) according to any of the preceding claims, **characterized in that** the first pivot unit (20) is arranged and designed in such a way that the first pivot unit (20) is designed to be movable in a direction parallel to the first pivot axis (24)
and/or
**in that** the second pivot unit (26) is arranged and designed in such a way that the second pivot unit (26) is designed to be movable in a direction parallel to the second pivot axis (30).

7. Method for bending at least one conductor element (12) which is U-shaped in an initial state or a conductor element assembly which comprises a plurality of conductor elements (12) arranged one next to the other and which consists of a first straight limb (14), a second straight limb (16) and an arcuate connecting portion (18) which connects the two limbs (14, 16) , wherein the conductor element (12) is suitable to be inserted into a stator core, wherein the conductor elements (12) of the conductor element assembly are formed having an identical connecting portion (18), wherein the method comprises the following steps:
- arranging the arcuate connecting portion (18) within a guide assembly (32),
- receiving the first limb (14) in a first limb-receiving means (22) in a clampingly fixed manner,
- receiving the second limb (16) in a second limb-receiving means (28) in a clampingly fixed manner,
- pivoting the part of the first limb (14) received in the first limb-receiving means (22) on a first circular path about a first pivot axis (24) in a pivoting direction,
- pivoting the part of the second limb (16) received in the second limb-receiving means (28) on a second circular path about a second pivot axis (30) in the pivoting direction, wherein the first limb-receiving means (22) and the second limb-receiving means (28) can be pivoted away from one another, both in a clockwise or counterclockwise direction, in the same pivoting direction (56) on the respective circular paths, wherein the arcuate connecting portion (18) of the conductor element (12) is deformed and displaced parallel to the pivot axes (24, 30), wherein part of the connecting portion (18) is held in its orientation by the guide assembly (32), wherein when the part of the first limb (14) received in the first limb-receiving means (22) is pivoted, a deformed portion (40) of the first limb (14), which extends from the part of the first limb (14) that is received in the first limb-receiving means (22) in the direction of the connecting portion (18), is bent against a first guide surface (38), so that a contour of the first guide surface (38) is at least partially impressed on the deformed portion (40) of the first limb (14).

8. Method according to claim 7, **characterized in that** when the part of the second limb (16) received in the second limb-receiving means (28) is pivoted, a deformed portion (44) of the second limb (16), which extends from the part of the second limb (16) that is received in the second limb-receiving means (28) in the direction of the connecting portion (18), is bent against a second guide surface (42), so that a contour of the second guide surface (42) is at least partially impressed on the deformed portion (44) of the second limb (16).

9. Method according to any of claims 7 or 8, **characterized in that** when the part of the first limb (14) received in the first limb-receiving means (22) is pivoted, the first limb-receiving means (22) is moved in a direction parallel to the first pivot axis (24)
and/or
**in that** when the part of the second limb (16) received in the second limb-receiving means (28) is pivoted, the second limb-receiving means (28) is moved in a direction parallel to the second pivot axis (30).

10. Method according to any of claims 7 to 9, **characterized in that** the method further comprises the step of:
- pressing a contact surface (48) against the deformed portion (40) of the first limb (14) and/or against the deformed portion (44) of the second limb (16), so that a contour of the contact surface (48) is at least partially impressed on the deformed portion (40) of the first limb (14) and/or the deformed portion (44) of the second limb (16).

11. Method according to any of claims 7 to 10, **characterized in that** a device according to any of claims 1 to 6 is used when carrying out the method.

## Revendications

1. Dispositif (10) pour cintrer au moins une pièce conductrice (12) en forme de U dans un état initial, qui dans un état initial est constituée d'une première branche (14) s'étendant en ligne droite, d'une deuxième branche (16) s'étendant en ligne droite et d'une section de liaison (18) arquée, qui relie les deux branches (14, 16), dans lequel la pièce conductrice (12) est adaptée pour être insérée dans un noyau de stator, dans lequel le dispositif (10) comprend :
- une première unité de pivotement (20) avec un premier logement de branche (22), qui est réalisée de manière à pouvoir pivoter autour d'un premier axe de pivotement (24) sur une première trajectoire circulaire et est réalisée pour le logement par serrage de la première branche (14) de la pièce conductrice (12),
- une deuxième unité de pivotement (26) avec un deuxième logement de branche (28), qui est réalisée de manière à pouvoir pivoter autour d'un deuxième axe de pivotement (30) sur une deuxième trajectoire circulaire et est réalisée pour le logement par serrage de la deuxième branche (16) de la pièce conductrice (12),
- dans lequel le premier logement de branche (22) et le deuxième logement de branche (28) peuvent s'éloigner l'un de l'autre en pivotant dans la même direction de pivotement (56), tous les deux dans le sens horaire ou tous les deux dans le sens antihoraire, sur les trajectoires circulaires respectives,
- un système de guidage (32) comprenant un premier élément de guidage (34) avec une première surface de formage (35) et un deuxième élément de guidage (36) avec une deuxième surface de formage (37),
- dans lequel les deux éléments de guidage (34, 36) sont disposés ou peuvent être disposés de telle sorte que la section de liaison (18) arquée d'une pièce conductrice (12) à façonner ou de plusieurs pièces conductrices (12) à façonner à disposer les unes à côté des autres peut ou peuvent être disposées dans l'état initial de celle-ci ou de celles-ci entre les deux éléments de guidage (34, 36) de telle sorte que celles-ci sont guidées entre les surfaces (35, 37) à former ou mobiles avec celles-ci,
dans lequel le dispositif (10) comprend une première surface de guidage (38),
dans lequel la première surface de guidage (38) est disposée et réalisée de telle sorte que lors du pivotement de la première unité de pivotement (20) une section de façonnage (40) de la première branche (14), qui s'étend en partant de la partie de la première branche (14) logée dans le premier logement de branche (22) en direction de la section de liaison (18), est cintrée contre la première surface de guidage (38), de sorte qu'un tracé de contour de la première surface de guidage (38) est appliqué au moins en partie à la section de façonnage (40) de la première branche (14).

2. Dispositif (10) selon la revendication 1, **caractérisé en ce que** le premier élément de guidage (34) et le deuxième élément de guidage (36) peuvent se rapprocher l'un de l'autre et s'éloigner l'un de l'autre, en particulier le long d'une direction de guidage (39).

3. Dispositif (10) selon l'une quelconque des revendications précédentes, **caractérisé en ce que** le dispositif (10) comprend une deuxième surface de guidage (42), qui est réalisée en particulier de manière courbée et est disposée de préférence sur le deuxième élément de guidage (36), dans lequel la deuxième surface de guidage (42) est disposée et réalisée de telle sorte que lors du pivotement de la deuxième unité de pivotement (26) une section de façonnage (44) de la deuxième branche (16), qui s'étend en partant de la partie de la deuxième branche (16) logée dans le deuxième logement de branche (28) en direction de la section de liaison (18), est cintrée contre la deuxième surface de guidage (42), de sorte qu'un tracé de contour de la deuxième surface de guidage (42) est appliqué au moins en partie à la section de façonnage (44) de la deuxième branche (16).

4. Dispositif (10) selon l'une quelconque des revendications précédentes, **caractérisé en ce que** le dispositif (10) comprend au moins un élément de mise en forme (46), lequel présente une surface de pression (48), dans lequel l'élément de mise en forme (46) est disposé et configuré de telle sorte qu'il peut être pressé avec sa surface de pression (48) sur la section de façonnage (40) de la première branche (14) ou sur la section de façonnage (44) de la deuxième branche (16), en particulier par un mouvement de l'élément de mise en forme (46) le long de la direction de guidage (39), de sorte qu'un tracé de contour de la surface de pression (48) est appliqué au moins en partie à la section de façonnage (40) de la première branche (14) ou à la section de façonnage (44) de la deuxième branche (16).

5. Dispositif (10) selon la revendication 4, **caractérisé en ce que** l'élément de mise en forme (46) est disposé et configuré de telle sorte que la surface de pression (48) de l'élément de mise en forme (46) et la première surface de guidage (38) ou la surface de pression (48) de l'élément de mise en forme (46) et la deuxième surface de guidage (42) peuvent se rapprocher l'une de l'autre et s'éloigner l'une de l'autre.

6. Dispositif (10) selon l'une quelconque des revendications précédentes, **caractérisé en ce que** la première unité de pivotement (20) est disposée et configurée de telle sorte que la première unité de pivotement (20) est réalisée de manière mobile sur une direction dirigée parallèlement au premier axe de pivotement (24)
et/ou
**que** la deuxième unité de pivotement (26) est disposée et configurée de telle sorte que la deuxième unité de pivotement (26) est réalisée de manière mobile sur une direction dirigée parallèlement au deuxième axe de pivotement (30).

7. Procédé pour cintrer au moins une pièce conductrice (12) en forme de U dans un état initial ou un paquet de pièces conductrices, qui comprend plusieurs pièces conductrices (12) disposées les unes à côté des autres, qui est constitué d'une première branche (14) s'étendant en ligne droite, d'une deuxième branche (16) s'étendant en ligne droite et d'une section de liaison (18) arquée, qui relie les deux branches (14, 16), dans lequel la pièce conductrice (12) est adaptée pour être insérée dans un noyau de stator, dans lequel les pièces conductrices (12) du paquet de pièces conductrices sont réalisées avec une section de liaison (18) identique, dans lequel le procédé comprend les étapes suivantes :
- la disposition de la section de liaison (18) arquée à l'intérieur d'un système de guidage (32),
- le logement fixé par serrage de la première branche (14) dans un premier logement de branche (22),
- le logement fixé par serrage de la deuxième branche (16) dans un deuxième logement de branche (28),
- le pivotement de la partie de la première branche (14) logée dans le premier logement de branche (22) sur une première trajectoire circulaire autour d'un premier axe de pivotement (24) dans une direction de pivotement,
- le pivotement de la partie de la deuxième branche (16) logée dans le deuxième logement de branche (28) sur une deuxième trajectoire circulaire autour d'un deuxième axe de pivotement (30) dans la direction de pivotement, dans lequel le premier logement de branche (22) et le deuxième logement de branche (28) peuvent s'éloigner l'un de l'autre en pivotant tous les deux dans le sens horaire ou tous les deux dans le sens antihoraire, dans lequel la section de liaison (18) arquée de la pièce conductrice (12) est déformée et déplacée parallèlement aux axes de pivotement (24, 30), dans lequel une partie de la section de liaison (18) est retenue dans son orientation par le système de guidage (32), dans lequel lors du pivotement de la partie de la première branche (14) logée dans le premier logement de branche (22) une section de façonnage (40) de la première branche (14), qui s'étend en partant de la partie de la première branche (14) logée dans le premier logement de branche (22) en direction de la section de liaison (18), est cintrée contre une première surface de guidage (38), de sorte qu'un tracé de contour de la première surface de guidage (38) est appliqué au moins en partie à la section de façonnage (40) de la première branche (14).

8. Procédé selon la revendication 7, **caractérisé en ce que** lors du pivotement de la partie de la deuxième branche (16) logée dans le deuxième logement de branche (28) une section de façonnage (44) de la deuxième branche (16), qui s'étend en partant de la partie de la deuxième branche (16) logée dans le deuxième logement de branche (28) en direction de la section de liaison (18), est cintrée contre une deuxième surface de guidage (42), de sorte qu'un tracé de contour de la deuxième surface de guidage (42) est appliqué au moins en partie à la section de façonnage (44) de la deuxième branche (16) .

9. Procédé selon la revendication 7 ou 8, **caractérisé en ce que** lors du pivotement de la partie de la première branche (14) logée dans le premier logement de branche (22) le premier logement de branche (22) est déplacé le long d'une direction parallèle au premier axe de pivotement (24)
et/ou
**que** lors du pivotement de la partie de la deuxième branche (16) logée dans le deuxième logement de branche (28) le deuxième logement de branche (28) est déplacé le long d'une direction parallèle au deuxième axe de pivotement (30).

10. Procédé selon l'une quelconque des revendications 7 à 9, **caractérisé en ce que** le procédé comprend en outre l'étape :
- de pression d'une surface de pression (48) sur la section de façonnage (40) de la première branche (14) et/ou sur la section de façonnage (44) de la deuxième branche (16), de sorte qu'un tracé de contour de la surface de pression (48) est appliqué au moins en partie à la section de façonnage (40) de la première branche (14) et/ou à la section de façonnage (44) de la deuxième branche (16).

11. Procédé selon l'une quelconque des revendications 7 à 10, **caractérisé en ce que** lors de la mise en œuvre du procédé un dispositif selon l'une quelconque des revendications 1 à 6 est utilisé.
